# FASCICULE DE BREVET EUROPEEN

(11) **EP 1 410 674 B1**
(45) Date de publication et mention de la délivrance du brevet: **13.09.2006**
(21) Numéro de dépôt: 02774828.4
(22) Date de dépôt: 24.07.2002
(51) Int. Cl.: H04Q 7/38, G10L 17/00

(54) **PROCEDE ET SYSTEME DE CONTROLE D'ACCES**
VERFAHREN UND SYSTEM ZUR ZUGANGSREGELUNG
METHOD AND SYSTEM FOR ACCESS CONTROL

(30) Priorité: 25.07.2001 FR 0109941
(43) Date de publication de la demande: 21.04.2004
(73) Titulaire: FRANCE TELECOM, 75015 Paris (FR)
(72) Inventeur: CHARLET, Delphine, F-22300 Lannion (FR)
(74) Mandataire: Remy, Vincent Noel Paul
(86) Numéro de dépôt international: PCT/FR2002/002653
(87) Numéro de publication internationale: WO 2003/010990

(56) Documents cités:
- US-A- 5 499 288
- US-A- 5 805 674
- US-A- 6 157 848

## Description

La présente invention concerne un procédé de contrôle d'accès comportant une étape de diffusion d'une question à un utilisateur, une étape d'enregistrement par l'utilisateur d'une réponse à cette question et une étape de vérification de la réponse de l'utilisateur à la question posée. L'invention concerne également un système de contrôle d'accès.

Généralement, un procédé de contrôle d'accès consiste à présenter à l'utilisateur, lorsqu'il effectue une demande d'accès à un service ou à des informations personnelles, une question écrite personnelle que ce dernier a au préalable entrée manuellement au moyen d'un clavier numérique. L'utilisateur entre alors, de la même façon, une réponse qui est comparée à une réponse écrite que ce dernier a également entré manuellement au préalable. Selon ce procédé, on autorise l'accès à l'utilisateur si les deux réponses coïncident.

Cependant, dans le cas d'application à des services téléphoniques, un tel procédé nécessite une saisie à partir d'un clavier alphanumérique, ce qui est contraignant et long. De plus, il suffit qu'un autre utilisateur connaisse la réponse à la question personnelle pour que cet autre utilisateur ait accès au service ou aux informations personnelles.

Un autre procédé classique appliqué à un service vocal, est décrit dans le brevet US n° 5,499,288 déposé au nom de Voice Central Systems. Dans ce procédé, on invite l'utilisateur à prononcer un mot de passe. On effectue alors une reconnaissance du mot de passe indépendante de la voix. Ce procédé nécessite la mémorisation d'un mot de passe, par exemple une série de chiffres.

Un autre procédé dassique, appliqué à un service vocal, est décrit dans le brevet US n° 6,161,090, déposé au nom de IBM. Selon ce procédé, un serveur diffuse aléatoirement des questions relatives à un profil de l'utilisateur, le serveur disposant d'informations textuelles sur ce profil dans une base de données. Le serveur vérifie les réponses de l'utilisateur, d'une part, par reconnaissance de parole indépendante du locuteur et, d'autre part, par reconnaissance du locuteur indépendante du texte. Ainsi, le serveur contrôle à la fois le contenu de la réponse et la voix de l'utilisateur.

Ce procédé est simple d'utilisation pour l'utilisateur, mais il met en oeuvre des algorithmes de reconnaissance automatiques complexes et suppose que le système comporte une base de données d'informations textuelles sur le profil de l'utilisateur.

L'invention vise à remédier aux inconvénients des procédés classiques, en créant un procédé de contrôle d'accès qui soit fiable, simple d'utilisation, notamment à partir d'un appareil téléphonique, et qui mette en oeuvre des algorithmes simples.

L'invention a donc pour objet un procédé de contrôle d'accès selon la revendication principale 1.

Ainsi, un procédé de contrôle d'accès selon l'invention ne nécessite pas l'utilisation d'un clavier alphanumérique puisqu'il est entièrement vocal et ne nécessite pas la mise en oeuvre d'algorithmes complexes, puisqu'aucune analyse sémantique de la question diffusée et de la réponse préenregistrée n'est requise.

Un procédé de contrôle d'accès selon l'invention peut en outre comporter l'une ou plusieurs des caractéristiques suivantes :
- suite à l'étape de vérification, si la réponse de l'utilisateur à la question posée est validée, le procédé de contrôle autorise l'accès à des informations via un réseau de transmission de ces informations ;
- le modèle de réponse est généré à partir d'une réponse sonore de l'utilisateur ;
- le modèle de réponse est généré en mode de reconnaissance de parole monolocuteur ;
- le modèle de réponse est généré en mode de reconnaissance de locuteur dépendante du texte ;
- le modèle de réponse est un Modèle de Markov Caché ;
- la comparaison est effectuée en mode de vérification de texte sur référence monolocuteur et/ou en mode de vérification du locuteur ;
- plusieurs questions sonores et plusieurs modèles de réponses sonores de l'utilisateur associés sont contenus dans des fichiers préalablement créés par l'utilisateur, et l'étape de diffusion comporte la diffusion sonore d'une question choisie aléatoirement parmi les questions sonores contenues dans les fichiers préalablement créés.

L'invention a également pour objet un système de contrôle d'accès, selon la revendication 7.

Le système de contrôle d'accès selon l'invention peut en outre comporter la caractéristique selon laquelle il comporte des moyens de mise en communication téléphonique des moyens d'enregistrement et des moyens de contrôle d'accès avec un appareil téléphonique, via un réseau de télécommunication.

L'invention sera mieux comprise à l'aide de la description qui va suivre, donnée uniquement à titre d'exemple et faite en se référant aux dessins annexés sur lesquels :
- la figure 1 représente un système pour la mise en oeuvre d'un procédé de contrôle d'accès selon l'invention ;
- la figure 2 représente les étapes d'un procédé de création préalable de fichiers contenant une question sonore et une réponse sonore enregistrées par l'utilisateur ; et
- la figure 3 représente un procédé de contrôle d'accès selon l'invention.

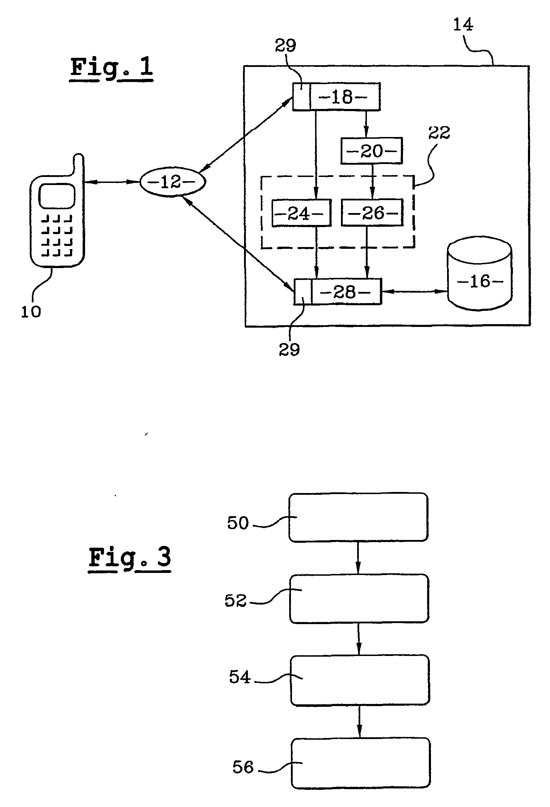

Le système représenté à la figure 1 comporte un appareil téléphonique 10 connecté à un réseau 12 de transmission d'informations, tel qu'un réseau de type GSM, GPRS ou UMTS si l'appareil téléphonique 10 est un téléphone mobile.

Par l'intermédiaire de ce réseau 12, un utilisateur de l'appareil téléphonique 10 peut entrer en communication avec un serveur vocal 14 offrant, par exemple, un service de consultation d'informations personnelles, telles que des messages stockés dans des moyens de stockage 16 de ce serveur vocal, tels qu'une mémoire RAM.

Le serveur vocal 14 comporte des moyens 18 d'enregistrement d'une question sonore et d'une réponse sonore associée, des moyens 20 de modélisation de la réponse sonore et des moyens 22 de stockage d'un fichier audio 24 comportant la question sonore et d'un fichier 26 comportant un modèle de la réponse sonore.

Le serveur vocal 14 comporte en outre des moyens 28 de contrôle de l'accès à la mémoire RAM 16 par l'utilisateur, ce contrôle étant effectué à partir des fichiers 24 et 26 stockés dans les moyens de stockage 22.

Enfin, le serveur vocal 14 comporte des moyens 29 de mise en communication téléphonique des moyens d'enregistrement 18 et des moyens de contrôle d'accès 28 avec l'appareil téléphonique 10, via le réseau 12.

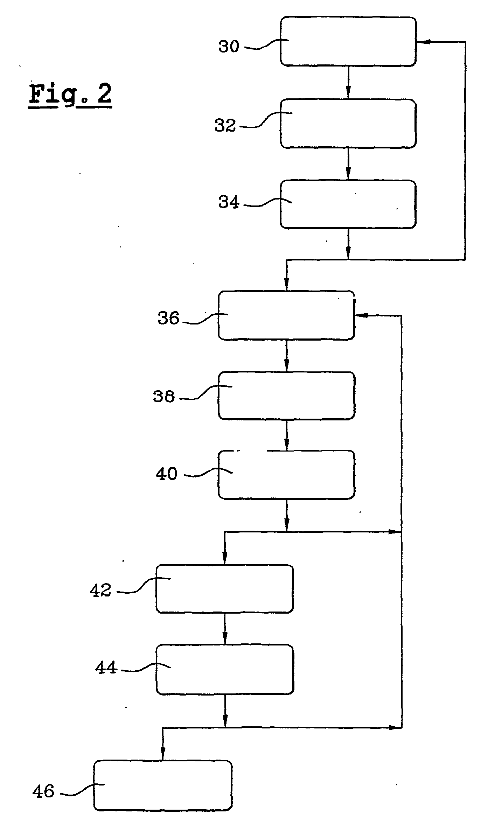

Le fonctionnement des moyens d'enregistrement 18 va maintenant être décrit en référence à la figure 2.

Sur cette figure, on a représenté les étapes d'un procédé d'enregistrement préalable de la question sonore et de la réponse sonore associée.

Lors d'une première étape 30, l'utilisateur compose le numéro du serveur vocal 14 et choisit, sur proposition du serveur vocal 14, l'enregistrement d'une question et d'une réponse associée. Lors de cette étape, les moyens d'enregistrement 18 proposent à l'utilisateur d'enregistrer d'abord la question, en l'informant que cette question doit être personnelle et ne doit pas impliquer de variabilité dans la réponse.

Lors de l'étape 32 suivante, l'utilisateur dicte une question personnelle à partir de l'appareil téléphonique 10. Cette question est automatiquement enregistrée sous forme d'un fichier audio tel que le fichier 24.

Ensuite, lors d'une étape 34, l'utilisateur valide ou non l'enregistrement de cette question. S'il ne valide pas cet enregistrement, on retourne à l'étape 30, sinon on passe à une étape 36, après avoir stocké le fichier 24 contenant la question personnelle dans les moyens de stockage 22.

Lors de l'étape 36, les moyens d'enregistrement 18 proposent à l'utilisateur d'enregistrer la réponse à la question personnelle enregistrée lors des étapes précédentes, et lui rappelle que cette réponse doit être unique, connue de lui seul et simple à mémoriser.

Lors d'une étape 38, identique à l'étape 32, l'utilisateur dicte sa réponse qui est automatiquement enregistrée sous forme d'un fichier audio par les moyens d'enregistrement 18.

Lors de l'étape 40 suivante, identique à l'étape 34, les moyens d'enregistrement 18 proposent à l'utilisateur de valider l'enregistrement de cette réponse.

Si l'utilisateur ne valide pas cette réponse, on retourne à l'étape 36, sinon on passe à une étape 42 d'incrémentation.

Lors de cette étape 42 d'incrémentation, les moyens d'enregistrement incrémentent un compteur du nombre d'enregistrements de la réponse effectués.

Lors de l'étape 44 suivante, les moyens d'enregistrement proposent à l'utilisateur un autre enregistrement de la réponse. En effet, le système permet à l'utilisateur d'enregistrer plusieurs versions de la réponse, afin d'améliorer les performances d'une étape 46 de traitement qui est détaillé ci-dessous.

Si l'utilisateur souhaite enregistrer une nouvelle fois sa réponse associée à la question personnelle, on passe à l'étape 36. Sinon, on passe à une étape 46 de traitement des réponses enregistrées. Cette étape est effectuée par les moyens de modélisation 20.

Lors de cette étape, les moyens de modélisation 20 créent un modèle de réponse, à partir des différents enregistrements de cette réponse effectués par l'utilisateur, Ce modèle est par exemple un Modèle de Markov Caché de la réponse. II s'agit d'un exemple de modèle généré en mode de reconnaissance du locuteur dépendante du texte.

Ce modèle de réponse est contenu dans un fichier tel que le fichier 26 stocké dans les moyens de stockage 22.

Ce procédé d'enregistrement d'une question personnelle peut être réitéré plusieurs fois de sorte que la base de données comporte plusieurs questions personnelles et plusieurs réponses associées.

Le fonctionnement des moyens de contrôle d'accès 28 va maintenant être décrit en référence à la figure 3.

Lors d'une première étape 50, l'utilisateur appelle le serveur vocal 14 et demande à accéder aux informations le concernant, contenues dans la mémoire RAM 16. Les moyens de contrôle d'accès 28 diffusent, par exemple de façon aléatoire, l'une des questions personnelles préalablement enregistrées et stockées dans les moyens de stockage 22.

Lors de l'étape 52 suivante, l'utilisateur dicte à partir de l'appareil téléphonique 10 sa réponse à cette question personnelle.

Lors de l'étape 54 suivante, les moyens de contrôle d'accès 28 comparent cette réponse avec le modèle de réponse associé à la question secrète et stocké dans les moyens de stockage 22. Cette comparaison est effectuée en mode de vérification de texte sur référence monolocuteur et/ou en mode de vérification du locuteur.

Enfin, lors d'une dernière étape 56, de façon classique, si le résultat de la comparaison dépasse un seuil prédéterminé les moyens de contrôle d'accès 28 autorisent l'accès à la mémoire RAM 16 par l'utilisateur.

Il apparaît clairement qu'un procédé de contrôle d'accès selon l'invention permet de contrôler l'accès à des informations personnelles, de façon simple, fiable et entièrement vocale, à partir d'un appareil téléphonique 10 classique.

## Revendications

1. Procédé de contrôle d'accès comportant une étape (50) de diffusion d'une question à un utilisateur, une étape (52) d'enregistrement par l'utilisateur d'une réponse à cette question et une étape (54) de vérification de la réponse de l'utilisateur à la question posée, **caractérisé en ce que** la question diffusée est sonore, a été préalablement choisie, dictée et enregistrée par l'utilisateur, est contenue dans un fichier (24) préalablement créé à l'initiative de l'utilisateur et est associée à un modèle de réponse sonore (26) de l'utilisateur, également contenu dans un fichier préalablement créé à l'initiative de l'utilisateur, et généré à partir d'une réponse sonore de l'utilisateur, **en ce que** l'enregistrement de la réponse à la question diffusée est sonore, et **en ce que** la vérification (54) de la réponse de l'utilisateur à la question posée comporte une étape de comparaison entre la réponse de l'utilisateur à la question posée et le modèle de réponse (26).

2. Procédé de contrôle d'accès selon la revendication 1, **caractérisé en ce que**, suite à l'étape de vérification (54), si la réponse de l'utilisateur à la question posée est validée, le procédé de contrôle autorise l'accès à des informations via un réseau (12) de transmission de ces informations.

3. Procédé de contrôle d'accès selon la revendication 1 ou 2, **caractérisé en ce que** le modèle de réponse (26) est généré en mode de reconnaissance de locuteur dépendante du texte et/ou en mode de reconnaissance de parole monolocuteur.

4. Procédé de contrôle d'accès selon la revendication 3, **caractérisé en ce que** le modèle de réponse (26) est un Modèle de Markov Caché.

5. Procédé de contrôle d'accès selon l'une quelconque des revendications1 à 4, **caractérisé en ce que** la comparaison est effectuée en mode de vérification de texte sur référence monolocuteur et/ou en mode de vérification du locuteur.

6. Procédé de contrôle d'accès selon l'une quelconque des revendications 1 à 5, **caractérisé en ce que** plusieurs questions sonores et plusieurs modèles de réponses sonores de l'utilisateur associées sont contenus dans des fichiers préalablement créés par l'utilisateur, et **en ce que** l'étape de diffusion (50) comporte la diffusion sonore d'une question choisie aléatoirement parmi les questions sonores contenus dans les fichiers préalablement créés.

7. Système de contrôle d'accès, comportant des moyens de contrôle d'accès adaptés pour la diffusion d'au moins une question, l'enregistrement d'au moins une réponse à la question diffusée et la vérification de cette réponse, **caractérisé en ce que**, la question diffusée étant sonore, préalablement choisie, dictée et enregistrée par un utilisateur, le système comporte un serveur vocal comprenant des moyens d'enregistrement de cette question sonore et d'au moins un modèle de réponse sonore associé généré à partir d'une réponse sonore de l'utilisateur, **en ce qu'**il comprend des moyens de stockage d'au moins un fichier comportant la question diffusée et le modèle de réponse sonore (26), et **en ce qu'**il comporte des moyens de comparaison entre la réponse de l'utilisateur à la question posée et le modèle de réponse (26).

8. Système de contrôle d'accès selon la revendication 7, **caractérisé en ce qu'**il comporte des moyens (29) de mise en communication téléphonique des moyens d'enregistrement (18) et des moyens de contrôle d'accès (28) avec un appareil téléphonique (10), via un réseau de télécommunication (12).

## Claims

1. Method of access control comprising a step (50) of broadcasting a question to a user, a step (52) of recording by the user of a response to this question and a step (54) of verification of the response of the user to the question posed, **characterized in that** the question broadcast is audible, has been previously chosen, dictated and recorded by the user, is contained in a file (24) previously created on the initiative of the user and is associated with a model of audible response (26) of the user, also contained in a file previously created on the initiative of the user, and generated on the basis of an audible response of the user, **in that** the recording of the response to the question broadcast is audible, and **in that** the verification (54) of the response of the user to the question posed comprises a step of comparison between the response of the user to the question posed and the response model (26).

2. Method of access control according to Claim 1, **characterized in that**, following the verification step (54), if the response of the user to the question posed is validated, the method of control authorizes access to information via a network (12) for transmitting this information.

3. Method of access control according to Claim 1 or 2, **characterized in that** the response model (26) is generated in text-dependent speaker recognition mode and/or monospeaker speech recognition mode.

4. Method of access control according to Claim 3, **characterized in that** the response model (26) is a Hidden Markov Model.

5. Method of access control according to any one of Claims 1 to 4, **characterized in that** the comparison is made in text verification mode based on monospeaker reference and/or in speaker verification mode.

6. Method of access control according to any one of Claims 1 to 5, **characterized in that** several audible questions and several models of associated audible responses of the user are contained in files previously created by the user, and **in that** the broadcasting step (50) comprises the audible broadcasting of a question chosen randomly from among the audible questions contained in the files created previously.

7. System for access control, comprising means of control of access suitable for the broadcasting of at least one question, the recording of at least one response to the question broadcast and the verification of this response, **characterized in that**, the question broadcast being audible, previously chosen, dictated and recorded by a user, the system comprises a voice server comprising means of recording of this audible question and of at least one associated model of audible response generated on the basis of an audible response of the user, **in that** it comprises means of storage of at least one file comprising the question broadcast and the audible response model (20), and **in that** it comprises means of comparison between the response of the user to the question posed and the response model (26).

8. System of access control according to Claim 7, **characterized in that** it comprises means (29) of placement in telephonic communication of the means of recording (18) and the means of access control (28) with a telephone apparatus (10), via a telecommunications network (12).

## Patentansprüche

1. Zugriffskontrollverfahren, das einen Schritt (50) des Aussendens einer Frage an einen Benutzer, einen Schritt (52) des Aufzeichnens einer Antwort auf diese Frage durch den Benutzer und einen Schritt (54) der Überprüfung der Antwort des Benutzers auf die gestellte Frage aufweist, **dadurch gekennzeichnet, dass** die ausgesendete Frage sprachlich ist, vorher vom Benutzer ausgewählt, diktiert und aufgezeichnet wurde, in einer Datei (24) enthalten ist, die vorher auf Initiative des Benutzers erzeugt wurde, und dass sie einem sprachlichen Antwortmodell (26) des Benutzers zugeordnet ist, das ebenfalls in einer vorher auf Initiative des Benutzers erzeugten Datei enthalten ist und ausgehend von einer sprachlichen Antwort des Benutzers erzeugt wurde, dass die Aufzeichnung der Antwort auf die ausgesendete Frage sprachlich ist, und dass die Überprüfung (54) der Antwort des Benutzers auf die gestellte Frage einen Schritt des Vergleichs der Antwort des Benutzers auf die gestellte Frage mit dem Antwortmodell (26) enthält.

2. Zugriffskontrollverfahren nach Anspruch 1, **dadurch gekennzeichnet, dass** nach dem Schritt der Überprüfung (54), wenn die Antwort des Benutzers auf die gestellte Frage validiert ist, das Kontrollverfahren den Zugriff auf Informationen über ein Übertragungsnetz (12) dieser Informationen erlaubt.

3. Zugriffskontrollverfahren nach Anspruch 1 oder 2, **dadurch gekennzeichnet, dass** das Antwortmodell (26) im textabhängigen Sprechererkennungsmodus und/oder im sprecherabhängigen Spracherkennungsmodus erzeugt wird.

4. Zugriffskontrollverfahren nach Anspruch 3, **dadurch gekennzeichnet, dass** das Antwortmodell (26) ein Hidden-Markov-Modell ist.

5. Zugriffskontrollverfahren nach einem der Ansprüche 1 bis 4, **dadurch gekennzeichnet, dass** der Vergleich im Textverifikationsmodus mit sprecherabhängigem Bezug und/oder im Sprecherverifikationsmodus durchgeführt wird.

6. Zugriffskontrollverfahren nach einem der Ansprüche 1 bis 5, **dadurch gekennzeichnet, dass** mehrere sprachliche Fragen und mehrere zugeordnete sprachliche Antwortmodelle des Benutzers in vorher vom Benutzer erzeugten Dateien enthalten sind, und dass der Schritt der Aussendung (50) die sprachliche Aussendung einer Frage aufweist, die zufällig unter den in den vorher erzeugten Dateien enthaltenen sprachlichen Fragen ausgewählt wird.

7. Zugriffskontrollsystem, das zugriffskontrollmittel aufweist, die für die Aussendung mindestens einer Frage, die Aufzeichnung mindestens einer Antwort auf die ausgesendete Frage und die Überprüfung dieser Antwort ausgelegt sind, **dadurch gekennzeichnet, dass**, da die ausgesendete Frage eine sprachliche, vorher von einem Benutzer ausgewählte, diktierte und aufgezeichnete Frage ist, das System einen Sprachserver aufweist, der Mittel zur Aufzeichnung dieser sprachlichen Frage und mindestens eines zugeordneten sprachlichen Antwortmodells enthält, das ausgehend von einer sprachlichen Antwort des Benutzers erzeugt wird, dass es Mittel zur Speicherung mindestens einer Datei aufweist, die die ausgesendete Frage und das sprachliche Antwortmodell (26) enthält, und dass es Mittel zum Vergleich der Antwort des Benutzers auf die gestellte Frage mit dem Antwortmodell (26) aufweist.

8. Zugriffskontrollsystem nach Anspruch 7, **dadurch gekennzeichnet, dass** es Mittel (29) zur telefonischen Verbindung der Aufzeichnungsmittel (18) und der Zugriffskontrollmittel (28) mit einem Telefonapparat (10) über ein Fernsprechnetz (12) aufweist.
